# EUROPÄISCHE PATENTANMELDUNG

(11) **EP 3 511 646 A1**
(43) Veröffentlichungstag der Anmeldung: **17.07.2019**
(21) Anmeldenummer: 18151143.7
(22) Anmeldetag: 11.01.2018
(51) Int. Cl.: F24T 10/15

(54) **ERDWÄRMESONDE**

(71) Anmelder: Jansen AG, 9463 Oberriet (CH)
(72) Erfinder: Alge, Dietmar, 6890 Lustenau (AT); Brülisauer, Urs, 9463 Oberriet (CH)
(74) Vertreter: Fechner, Thomas

(57) **Zusammenfassung**

Erdwärmesonde (1) zur Gewinnung von Erdwärme aus dem Untergrund, wobei die Erdwärmesonde (1) zumindest ein Verbundrohr (2) und zumindest einen, das im Untergrund zu versenkende Ende der Erdwärmesonde (1) bildenden Sondenfuß (3) aufweist und das Verbundrohr (2) zumindest eine Metallschicht (4) und zumindest eine Kunststoffschicht (5, 6) aufweist, wobei die Erdwärmesonde (1) zusätzlich zumindest ein Kunststoffrohr (7) aufweist, wobei das Kunststoffrohr (7) und das Verbundrohr (2) in einem Übergangsbereich (8) ineinander einmünden und so ein durchgehendes Sondenrohr (9) der Erdwärmesonde (1) bilden, wobei die Erdwärmesonde (1) zumindest einen Sondenkopf (10) aufweist, welcher das dem Sondenfuß (3) gegenüberliegende andere Ende der Erdwärmesonde (1) bildet, wobei das Verbundrohr (2) einen Sondenfuß-seitigen Abschnitt und das Kunststoffrohr (7) einen Sondenkopf-seitigen Abschnitt des Sondenrohres (9) bildet.

## Beschreibung

Die vorliegende Erfindung betrifft eine Erdwärmesonde zur Gewinnung von Erdwärme aus dem Untergrund, wobei die Erdwärmesonde zumindest ein Verbundrohr und zumindest einen, das im Untergrund zu versenkende Ende der Erdwärmesonde bildenden Sondenfuß aufweist und das Verbundrohr zumindest eine Metallschicht und zumindest eine Kunststoffschicht aufweist, wobei die Erdwärmesonde zusätzlich zumindest ein Kunststoffrohr aufweist, wobei das Kunststoffrohr und das Verbundrohr in einem Übergangsbereich ineinander einmünden und so ein durchgehendes Sondenrohr der Erdwärmesonde bilden.

Bei Erdwärmesonden zur Gewinnung von Erdwärme, also von thermischer Energie aus dem Untergrund, ist es bekannt, Verbundrohre mit Metall und Kunststoffschichten einzusetzen. Ziel ist es einerseits, die Druckfestigkeit der Erdwärmesonde zu erhöhen und andererseits auch, eine Diffusion durch die Rohrwandung hindurch zu vermeiden. Die Verwendung eines Verbundrohres als Wärmeübertragungsrohr für den Entzug von Erdwärme ist in der DE 20 2007 008 880 U1 beschrieben. Die DE 35 27 440 C1 und die EP 0 485 651 A1 beschreiben den Anschluss von Verbundrohren an Verbindungsstücke aus Kunststoff bzw. an einen Sondenfuß. Eine gattungsgemäße Erdwärmesonde ist in der EP 2 966 333 A1 beschrieben.

Aufgabe der Erfindung ist es, gattungsgemäße Erdwärmesonden einerseits in den benötigten Bereichen möglichst druckfest auszugestalten, aber andererseits einen einfachen Anschluss der Erdwärmesonde an entsprechende Leitungssysteme mit marktüblichen Verbindungen zu ermöglichen.

Hierzu schlägt die Erfindung eine Erdwärmesonde gemäß Patentanspruch 1 vor.

Es ist somit vorgesehen, dass die Erdwärmesonde zumindest einen Sondenkopf aufweist, welcher das dem Sondenfuß gegenüberliegende andere Ende der Erdwärmesonde bildet, wobei das Verbundrohr einen Sondenfuß-seitigen Abschnitt und das Kunststoffrohr einen Sondenkopf-seitigen Abschnitt des Sondenrohres bildet.

Mit anderen Worten ist somit vorgesehen, dass ein jeweiliges Sondenrohr der Erdwärmesonde einen zum Sondenfuß weisenden Abschnitt aufweist, der ein Verbundrohr aufweist bzw. ist und andererseits einen zum Sondenkopf weisenden Abschnitt aufweist, welcher ein Kunststoffrohr aufweist bzw. ist. Hierbei wird berücksichtigt, dass die meist schräg oder vertikal nach unten in den Untergrund eingebauten Erdwärmesonden umso druckfester sein müssen, je tiefer man kommt. Diese Aufgabe wird durch das Sondenfuß-seitige Verbundrohr gelöst, welches durch die Metallschicht eine besonders hohe Druckfestigkeit aufweist. Außerdem sorgt diese Metallschicht im Verbundrohr für eine gute, vorzugsweise komplette, Diffusionsdichtigkeit. Die Verwendung eines einfachen Kunststoffrohres im Sondenkopf-seitigen Abschnitt des Sondenrohres ermöglicht es hingegen, am Sondenkopf in einfacher Art und Weise mit am Markt vorhandenen üblichen Verbindungsmitteln das Sondenrohr und damit die Erdwärmesonde an die üblicherweise vorhandenen Zu- und Ableitungen anzuschließen.

Mit der Formulierung, dass das Kunststoffrohr und das Verbundrohr in einem Übergangsbereich ineinander einmünden und so ein durchgehendes Sondenrohr der Erdwärme bilden, ist gemeint, dass das Kunststoffrohr und das Verbundrohr im Übergangsbereich so aneinander befestigt sind bzw. ineinander übergehen, dass sie ein durchgehendes Sondenrohr bilden, welches über seine Längserstreckung von einem Wärmeträgerfluid in seinem inneren Hohlraum durchströmt werden kann. In dem oder den Sondenrohren der Erdwärmesonde können handelsübliche Wärmeträgerfluide vorhanden sein. Dies können Flüssigkeiten, aber auch gasförmige Wärmeträgerfluide sein. Es ist auch denkbar, erfindungsgemäße Erdwärmesonden mit sogenannten zweiphasigen Wärmeträgerfluiden wie z.B. CO2 zu befüllen bzw. zu betreiben. Bei diesen zweiphasigen Wärmeträgerfluiden ist das Wärmeträgerfluid, wie an sich bekannt, in gewissen Bereichen der Erdwärmesonde bzw. des jeweiligen Sondenrohres gasförmig und in anderen Bereichen flüssig. Der Phasenübergang erfolgt durch Verdunsten bzw. Kondensieren im jeweiligen Bereich der Erdwärmesonde. Dies ist an sich bekannt und muss nicht weiter erläutert werden.

Als flüssige Wärmeträgerfluide, mit welchen das oder die Sondenrohre der Erdwärmesonde befüllt sein können, sind besonders bevorzugt Wasser oder Frostschutzmittel (z.B. Monoethylenglykol, usw.) oder Mischungen aus Wasser und Frostschutzmittel in allen Mischungsverhältnissen zu nennen.

Das in der Einbaustellung in der Regel untere Ende der Erdwärmesonde wird durch den Sondenfuß gebildet. Dieser schließt an das entsprechende untere Ende des Sondenrohres an und verbindet vorzugsweise das eine Sondenrohr mit einem anderen Sondenrohr der Erdwärmesonde fluidleitend. So können z.B. U-förmige Erdwärmesonden mit zwei entsprechenden Sondenrohren, welche über einen Sondenfuß fluidleitend miteinander verbunden sind, gebildet werden. Die Erdwärmesonde kann ein, zwei, aber auch mehr, z.B. vier, Sondenrohre aufweisen, wobei jedes Sondenrohr jeweils der Erfindung entsprechend ein Kunststoffrohr und ein damit im Übergangsbereich fluidleitend verbundenes bzw., allgemein gesprochen, einmündendes Verbundrohr aufweist. So können z.B. auch zwei U-förmig angeordnete Paare von Sondenrohren zu einer Erdwärmesonde kombiniert werden, wobei die Erdwärmesonde dann insgesamt vier Sondenrohre aufweist, welche günstigerweise mechanisch über den Sondenfuß und paarweise auch fluidleitend über den Sondenfuß miteinander verbunden sind.

Der Sondenkopf bildet das in der Regel in Einbaustellung gesehen obere, sich meist knapp unter der Erdoberfläche oder über der Erdoberfläche befindende Ende der Erdwärmesonde bzw. des jeweiligen Sondenrohres. Der Sondenkopf kann spezielle Anschlussflansche oder dergleichen aufweisen. Es kann sich aber auch einfach um ein Ende des Kunststoffrohres handeln.

Das Kunststoffrohr kann aus einem Monomaterial aber auch aus Mischmaterialien bestehen, es kann eine einzige Kunststoffschicht aufweisen, aber auch mehrere, vorzugsweise miteinander verbundene, Kunststoffschichten aufweisen. Im Kunststoffrohr wie auch in den Kunststoffschichten des Verbundrohres können, wie an sich bekannt, Verstärkungsfasern oder andere Zuschlagstoffe vorhanden sein. Das Kunststoffrohr ist aber bevorzugt frei von Metallschichten, also in anderen Worten ohne Metallschichten ausgebildet. Sowohl beim Kunststoffrohr als auch bei den Kunststoffschichten des Verbundrohres kommen vorzugsweise Thermoplaste wie z.B. PE, also Polyethylen, insbesondere PE 100, also Polyethylene 100, oder PE 100-RC, also Polyethylene 100 Resistance to Crack, PERT, also Polyethylene of Raised Temperature Resistance, PP, also Polypropylen und/oder PB, also Polybuthylen in Frage. Die Metallschicht kann z.B. aus Aluminium oder Stahl, insbesondere rostfreiem und/oder hochfestem Stahl, ausgebildet sein. Bevorzugte Varianten des im Zuge der Erfindung zum Einsatz kommenden Verbundrohres sehen vor, dass das Verbundrohr zumindest zwei Kunststoffschichten aufweist, wobei die Metallschicht eine der Kunststoffschichten umgibt und eine andere der Kunststoffschichten die Metallschicht umgibt. Die Kunststoffschichten und die Metallschichten können über dazwischen angeordnete Kleberschichten oder in anderer geeigneter Art und Weise miteinander verbunden sein. Weiters ist günstigerweise vorgesehen, dass die Metallschicht(en) des Verbundrohres und/oder die Kunststoffschicht(en) des Verbundrohres in sich jeweils umfangsgeschlossen ausgebildet ist bzw. sind. Eine umfangsgeschlossene Ausbildung der jeweiligen Schicht(en) bedeutet dabei, dass die Schicht als in sich geschlossener Zylindermantel ausgebildet ist. Es ist somit vorgesehen, dass in diesen Schichten abgesehen von den einander gegenüberliegenden Rohrenden keine Öffnungen oder dergleichen vorhanden sind, wie dies z.B. bei gitterartigen oder lochblechartigen Schichten der Fall wäre.

Günstigerweise ist vorgesehen, dass das Verbundrohr sich vom Übergangsbereich bis zum Sondenfuß erstreckt. Weiters ist günstigerweise vorgesehen, dass das Kunststoffrohr sich vom Übergangsbereich bis zum Sondenkopf erstreckt. Besonders bevorzugt ist vorgesehen, dass das Sondenrohr ausschließlich aus dem Verbundrohr und dem Kunststoffrohr und dem Übergangsbereich besteht. Bei Erdwärmesonden mit mehreren Sondenrohren gilt dies günstigerweise für jedes der Sondenrohre der Erdwärmesonde.

Günstig ist es, wenn das Verbundrohr und das Kunststoffrohr, vorzugsweise das gesamte Sondenrohr, also auch der Übergangsbereich einen konstanten inneren Öffnungsquerschnitt aufweisen. Hierdurch weist das entsprechende Rohr eine glatte innere Oberfläche auf, sodass es zu möglichst wenig Verwirbelungen und Strömungswiderständen innerhalb des entsprechenden Rohres bzw. Rohrabschnittes kommt. Der Öffnungsquerschnitt ist dabei die Querschnittsfläche der inneren Öffnung des Verbundrohres und des Kunststoffrohres bzw. des gesamten Sondenrohres. Mit einem konstanten inneren Öffnungsquerschnitt ist gemeint, dass über die Längserstreckung des Verbundrohres und Kunststoffrohres, vorzugsweise über die Längserstreckung des gesamten Sondenrohres überall derselbe innere Öffnungsquerschnitt realisiert ist. Es ist aber auch möglich, den inneren Öffnungsquerschnitt variabel zu gestalten. Z.B. kann zur weiteren Optimierung des Strömungswiderstandes der innere Öffnungsquerschnitt im Kunststoffrohr auch größer als im Verbundrohr ausgebildet werden.

Im Sinne einer Materialeinsparung und/oder zur Ausbildung von Standardanschlussmöglichkeiten sehen bevorzugte Varianten der Erfindung vor, dass das Kunststoffrohr einen kleineren Außenquerschnitt als das Verbundrohr aufweist. Hierdurch kann Material beim Kunststoffrohr eingespart werden. Da das Kunststoffrohr sich in einem Sondenkopf-seitigen Abschnitt des Sondenrohres befindet, müssen hierdurch auch keine relevanten Verluste in der Druckfestigkeit des Sondenrohres an sich hingenommen werden, da die hohe Druckfestigkeit ja insbesondere in der Nähe des Sondenfußes benötigt wird, in der das Sondenrohr ja durch das Verbundrohr gebildet ist.

Der Außenquerschnitt des jeweiligen Rohres ist dabei die Querschnittsfläche, welche von der äußeren Oberfläche des Rohres begrenzt wird. In kreiszylindrischen Ausgestaltungsformen der Rohre wird der innere Öffnungsquerschnitt durch den Innendurchmesser und der Außenquerschnitt des jeweiligen Rohres durch seinen Außendurchmesser vorgegeben.

In bevorzugten Ausführungsvarianten ist vorgesehen, dass das Verbundrohr eine Länge von 3m (Meter) bis 800m, vorzugsweise von 200m bis 800m, aufweist. Das Kunststoffrohr weist bevorzugt eine Länge von 0,5m bis 200m, vorzugsweise von 5m bis 160m, auf.

Erfindungsgemäße Erdwärmesonden können sowohl im Lockergesteinsbereich als auch im Festgestein eingesetzt werden. Besonders bevorzugt kommen sie bei tieferen Bohrlöchern zum Einsatz.

Die Druckfestigkeit des Verbundrohres liegt günstigerweise im Bereich von 16 bar bis 80 bar, vorzugsweise von 25 bar bis 50 bar. Das Kunststoffrohr weist günstigerweise eine Druckfestigkeit im Bereich von 10 bar bis 25 bar, vorzugsweise von 10 bar bis 16 bar, auf. Der Sondenfuß ist günstigerweise für Drücke von 16 bar bis 80 bar, vorzugsweise von 25 bar bis 50 bar ausgelegt. Hierzu kann, wie weiter unten noch im Detail erläutert, der Sondenfuß mittels einer ihn vorzugsweise außen umgebenden Verstärkungshülse verstärkt sein. Um ein Abstreifen der Verstärkungshülse vom Sondenfuß zu vermeiden, kann die Verstärkungshülse über eine Rückschubsicherung mit dem Sondenfuß vorzugsweise formschlüssig verbunden sein. Die Verstärkungshülse besteht günstigerweise aus Metall oder aus faserverstärkten Kunststoffen. Im Fall von Metall handelt es sich bevorzugt um Stähle wie z.B. hochfeste oder rostbeständige Stähle. Es kann sich aber auch um korrosionsbeständige Aluminiumlegierungen handeln, um ein weiteres Beispiel zu nennen.

Besonders bevorzugt ist auch vorgesehen, dass das Verbundrohr und/oder das Kunststoffrohr einen Außendurchmesser im Bereich von 20 mm bis 90 mm, vorzugsweise von 32 mm bis 63 mm, aufweist bzw. aufweisen.

Der Übergangsbereich zwischen Verbundrohr und Kunststoffrohr kann unterschiedlich ausgestaltet sein. Eine erste Variante von Möglichkeiten sieht dabei vor, dass das Verbundrohr im Übergangsbereich mittels zumindest einer Verbindungsmuffe mit dem Kunststoffrohr verbunden ist, indem das Kunststoffrohr an der Verbindungsmuffe befestigt, vorzugsweise angeschweißt oder angeklebt, und das Verbundrohr an der Verbindungsmuffe befestigt, vorzugsweise angeschweißt oder angeklebt, ist. In diesen Fällen ist das Sondenrohr somit aus drei ursprünglich separat gefertigten Teilen, nämlich dem Verbundrohr, der Verbindungsmuffe und dem Kunststoffrohr aufgebaut, indem diese drei Teile entsprechend miteinander verbunden werden. Dieses Verbinden bzw. Befestigen erfolgt günstigerweise über Schweißen oder Kleben, wobei beim Stand der Technik geeignete Kunststoffschweißverfahren und Klebeverfahren bekannt sind. Grundsätzlich ist es möglich, das Verbundrohr und die Verbindungsmuffe einerseits und die Verbindungsmuffe und das Kunststoffrohr andererseits stumpf zu verschweißen, zu verkleben oder anderweitig aneinander zu befestigen. Bevorzugte Varianten sehen jedoch vor, dass das Verbundrohr und das Kunststoffrohr an einander gegenüberliegenden Seiten der Verbindungsmuffe in die Verbindungsmuffe eingeschoben sind, wobei vorzugsweise vorgesehen ist, dass die Verbindungsmuffe das Verbundrohr und das Kunststoffrohr auf deren Außenflächen jeweils ein Stück weit überlappt. In diesen Varianten ist somit vorgesehen, dass sowohl das Verbundrohr als auch das Kunststoffrohr ein Stück weit in die Verbindungsmuffe hineinragen, sodass die Verbindungsmuffe bevorzugt sowohl das Kunststoffrohr als auch das Verbundrohr auf deren Außenflächen jeweils ein Stück weit überlappt. Die Verbindungsmuffe weist günstigerweise Kunststoff auf. Besonders bevorzugt besteht die Verbindungsmuffe ausschließlich aus Kunststoff. Zum Verbinden von Verbindungsmuffe und Verbundrohr können z.B. die aus der EP 2 966 333 A1 bekannten Vorgehensweisen bzw. Verfahren genutzt werden. Die Verbindung des Kunststoffrohres mit der Verbindungsmuffe kann aber muss nicht, wie in der EP 3 104 057 A1 beschrieben, ausgeführt werden.

Eine andere Art der Möglichkeit der Verbindung von Verbundrohr und Kunststoffrohr im Übergangsbereich sieht vor, dass das Verbundrohr im Übergangsbereich direkt mit dem Kunststoffrohr verbunden, vorzugsweise verschweißt oder verklebt, ist. In diesen Varianten wird das Kunststoffrohr also direkt mit dem Verbundrohr verbunden. Auch hier kommt vorzugsweise ein Verschweißen oder Verkleben in Frage. Es kann auch hier auf die in der EP 2 966 333 A1 geschilderten Arten der Verbindung zurückgegriffen werden.

Während bei den bislang geschilderten Varianten sowohl das Kunststoffrohr als auch das Verbundrohr zunächst als separate Rohre hergestellt und dann über die Verbindungsmuffe oder direkt miteinander verbunden werden, können andere Varianten der Erfindung vorsehen, dass das gesamte Sondenrohr in einem Stück, also in einem einzigen Produktionsvorgang und in sich zusammenhängend als Ganzes hergestellt wird. Hierzu sehen bevorzugte Varianten der Erfindung vor, dass im Übergangsbereich die Kunststoffschicht oder zumindest eine der Kunststoffschichten des Verbundrohres einstückig in das Kunststoffrohr übergeht und die Metallschicht des Verbundrohres im Übergangsbereich endet. Besonders bevorzugt ist hierbei vorgesehen, dass die Kunststoffschicht oder zumindest eine der Kunststoffschichten des Verbundrohres, welche einstückig in das Kunststoffrohr übergeht, im Verbundrohr innerhalb der Metallschicht angeordnet ist. Das Ende der Metallschicht ist günstigerweise im Übergangsbereich nach außen von einem Kunststoffkörper überdeckt, um so eine Korrosion der Metallschicht zu vermeiden. Die Kunststoffschichten des Verbundrohres, wie auch das Kunststoffrohr selbst können dabei in an sich bekannten Extrusions- bzw. Koextrusionsverfahren hergestellt werden. Die Metallschicht kann dabei zum richtigen Zeitpunkt bzw. an der richtigen Stelle abgeschnitten oder hinzugefügt werden.

Weitere Merkmale und Einzelheiten bevorzugter Ausgestaltungsformen der Erfindung werden nachfolgend anhand der Figurenbeschreibung erläutert. Es zeigen:
Fig. 1 bis 3 schematisiert verschiedene Darstellungen einer erfindungsgemäß ausgebildeten Erdwärmesonde;
Fig. 4 die am Sondenfuß verwendete Verstärkungshülse dieses Ausführungsbeispiels;
Fig. 5 bis 9 verschiedene Varianten der Ausgestaltung des Übergangsbereichs jeweils in einer vergrößerten Darstellung des Abschnitts A aus Fig. 2 und Fig. 10, 11 und 12 eine Variante der Erfindung unter Verwendung einer Verbindungsmuffe.

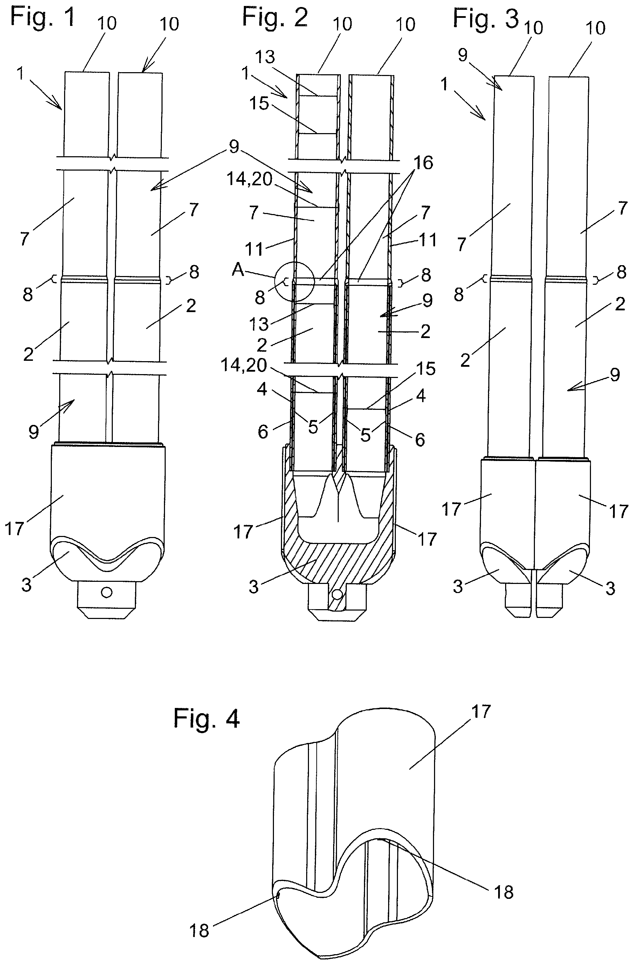

Die in den Fig. 1 bis 3 beispielhaft dargestellte Erdwärmesonde 1 weist insgesamt vier Sondenrohre 9 auf. Jeweils zwei dieser Sondenrohre 9 sind in einem Sondenfuß 3 fluidleitend miteinander verbunden und bilden zusammen eine U-förmige Leitung. Dies ist besonders gut im Längsschnitt gemäß Fig. 2 durch die Seitenansicht gemäß Fig. 1 zu sehen. Fig. 3 zeigt eine um 90° gegenüber Fig. 1 gedrehte Seitenansicht. Hier ist gut zu erkennen, dass hier in diesem Beispiel insgesamt zwei Sondenfüße 3 vorhanden sind, wobei jeder der Sondenfüße 3 jeweils zwei der Sondenrohre 9 fluidleitend miteinander verbindet und diese beiden Sondenfüße 3 wiederum, z.B. durch Verschrauben, Verkleben, Verschweißen oder andere geeignete Varianten miteinander verbunden sind. Jedes der Sondenrohre 9 weist ein Kunststoffrohr 7 und ein Verbundrohr 2 auf, welche jeweils in einem Übergangsbereich 8 ineinander einmünden, um so ein durchgehendes, also durchgehend von Wärmeträgerfluid durchströmbares Sondenrohr 9 der Erdwärmesonde 1 zu bilden. Das Verbundrohr 2 bildet dabei jeweils erfindungsgemäß einen Sondenfuß-seitigen Abschnitt des Sondenrohres 9. Das Kunststoffrohr 7 bildet einen Sondenkopf-seitigen Abschnitt des Sondenrohres 9. Im gezeigten Ausführungsbeispiel gemäß der Fig. 1 bis 3 erstreckt sich das Verbundrohr 2 vom Übergangsbereich 8 bis zum Sondenfuß 3. Das jeweilige Kunststoffrohr 7 erstreckt sich vom Übergangsbereich 8 bis zum Sondenkopf 10. Somit besteht jedes Sondenrohr 9 im gezeigten Ausführungsbeispiel ausschließlich aus dem Verbundrohr 2, dem Kunststoffrohr 7 und dem dazwischen angeordneten Übergangsbereich 8. Der Sondenkopf 10 wird im gezeigten Ausführungsbeispiel durch die oberen Enden des jeweiligen Kunststoffrohres 7 gebildet. Der Sondenfuß 3 bildet das im Untergrund zu versenkende Ende der Erdwärmesonde 1.

Im gezeigten Ausführungsbeispiel ist jedes der Verbundrohre 2 dreischichtig ausgebildet. Neben der Metallschicht 4 weist jedes der Verbundrohre 2 zwei Kunststoffschichten 5 und 6 auf, wobei die Metallschicht 4 eine der Kunststoffschichten 5 umgibt und eine andere der Kunststoffschichten 6 die Metallschicht 4 umgibt. Sowohl die Metallschicht 4 als auch die Kunststoffschichten 5 und 6 sind jeweils in sich umfangsgeschlossen ausgebildet. Die in der Mitte liegende Metallschicht 4 sorgt einerseits für eine hohe Druckfestigkeit und andererseits auch für eine gute Diffusionsdichtigkeit. Die Kunststoffschichten 5 und 6 schützen die Metallschicht von außen gegen mechanische und chemische Beeinträchtigung und vor allem auch gegen Korrosion. Im gezeigten Ausführungsbeispiel weisen das Verbundrohr 2 und das Kunststoffrohr 7 und auch der dazwischen angeordnete Übergangsbereich 8 einen konstanten inneren Öffnungsquerschnitt 13 auf. Dies gilt somit für die gesamte Längserstreckung des Sondenrohres 9. Im Vergleich zum Verbundrohr 2 weist das Kunststoffrohr 7 einen kleineren Außenquerschnitt 14 auf. Diese Ausgestaltungen des inneren Öffnungsquerschnitts 13 und des Außenquerschnitts 14 müssen aber natürlich nicht so gewählt sein. Es sind auch andere, insbesondere variable, innere Öffnungsquerschnitte 13 und/oder Außenquerschnitte 14 und natürlich auch konstante Außenquerschnitte 14 möglich.

Fig. 4 zeigt die hier zum Einsatz kommende Verstärkungshülse 17 mit der die Druckfestigkeit der Sondenfüße 3 erhöht wird. Insgesamt sind zwei Verstärkungshülsen 17 bei der hier gezeigten Erdwärmesonde 1 vorhanden. Jede der Verstärkungshülsen 17 umgibt einen jeweiligen der Sondenfüße 13 formschlüssig und umfangsgeschlossen. Die z.B. als Vorsprünge ausgebildeten Rückschubsicherungen 18 vermeiden durch entsprechend formschlüssigen Eingriff in den jeweiligen Sondenfuß 3, dass die Verstärkungshülse 17 beim Einbau der Erdwärmesonde 1 in ein Bohrloch vom Sondenfuß 3 abgestriffen werden kann.

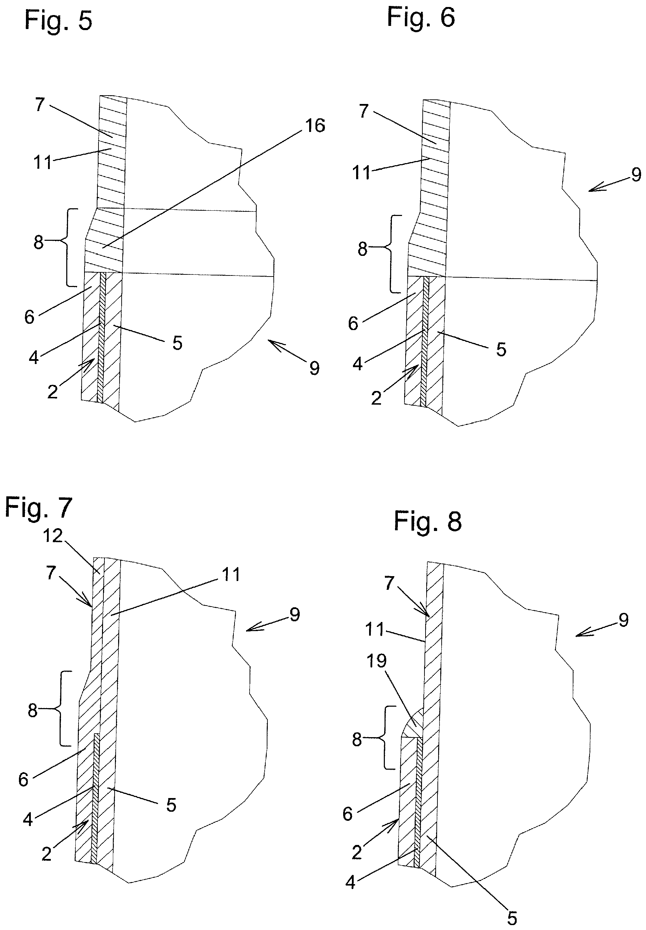

Die Fig. 5 bis 9 zeigen nun verschiedene Möglichkeiten der Ausgestaltung des Kunststoffrohres 7 und des Übergangsbereiches 8 jeweils in einer vergrößerten Darstellung des Bereichs A aus Fig. 2.

In der ersten Variante gemäß Fig. 5 besteht das Kunststoffrohr 7 aus einer einzigen Kunststoffschicht 11. Das Kunststoffrohr 7 ist mittels einer Verbindungsmuffe 16 mit dem Verbundrohr 2 verbunden. In diesem Fall wird also der Übergangsbereich 8 von der Verbindungsmuffe 16 gebildet. Nach der separaten bzw. getrennten Herstellung des Kunststoffrohres 7, der Verbindungsmuffe 16 und des Verbundrohres 2 werden diese drei Teile zum Sondenrohr 9 miteinander verbunden. Günstigerweise besteht die Verbindungsmuffe aus Kunststoff. Die Verbindung zwischen Kunststoffrohr 7 und Verbindungsmuffe 16 einerseits und zwischen Verbindungsmuffe 16 und Verbundrohr 2 andererseits kann mittels Verkleben oder an sich bekanntem Kunststoffschweißen an den Stoßflächen der Kunststoffschichten 5 und 6 sowie der Verbindungsmuffe 16 und des Kunststoffrohres 7 erfolgen. Im Übergangsbereich 8 erfolgt auch die Verjüngung des Außenquerschnitts 14 vom Verbundrohr 2 zum Kunststoffrohr 7. Hierdurch kann im Kunststoffrohr 7 durch eine entsprechend dünnwandigere Ausgestaltung Material eingespart werden. Es ist auch eine Anpassung der Querschnitte zur einfacheren Verbindung mit Standardfittingen möglich.

Fig. 6 zeigt nun eine erste Variante, wie der Übergangsbereich 8 ohne Verbindungsmuffe 16 ausgestaltet werden kann. Dies geschieht im in Fig. 6 gezeigten Ausführungsbeispiel, indem die wiederum als eine einzige Kunststoffschicht 11 ausgebildete Wandung des Kunststoffrohres 7 an ihrem, dem Verbundrohr 2 zugewandten Ende in der Wandstärke zunimmt. Die hier realisierte, direkte Verbindung zwischen Kunststoffrohr 7 und Verbundrohr 2 im Übergangsbereich 8 kann wiederum durch Verschweißen oder Verkleben erfolgen. Auch hierzu können an sich bekannte Klebstoffe oder Stumpfschweißverfahren eingesetzt werden.

Die Fig. 7, 8 und 9 zeigen nun Varianten, bei denen im Übergangsbereich 8 zumindest eine der Kunststoffschichten 5 und 6 des Verbundrohres 2 einstückig in das Kunststoffrohr 7 übergeht und die Metallschicht 4 des Verbundrohres 2 im Übergangsbereich 8 endet. Bezüglich der Herstellung wird auf die eingangs bereits erwähnten Extrusionsverfahren verwiesen.

In Fig. 7 weist das Kunststoffrohr 2 eine innen liegende Kunststoffschicht 11 und eine außen liegende Kunststoffschicht 12 auf. Diese beiden Kunststoffschichten 11 und 12 sind günstigerweise mittels Verschmelzen und/oder Verkleben oder dergleichen miteinander verbunden. Die innere Kunststoffschicht 11 des Kunststoffrohrs 7 und die innere Kunststoffschicht 5 des Verbundrohres 2 gehen einstückig, also ohne Übergang als eine durchgehend Schicht ineinander über. Das Gleiche gilt für die äußere Kunststoffschicht 12 des Kunststoffrohres 7 und die äußere Kunststoffschicht 6 des Verbundrohres 2.

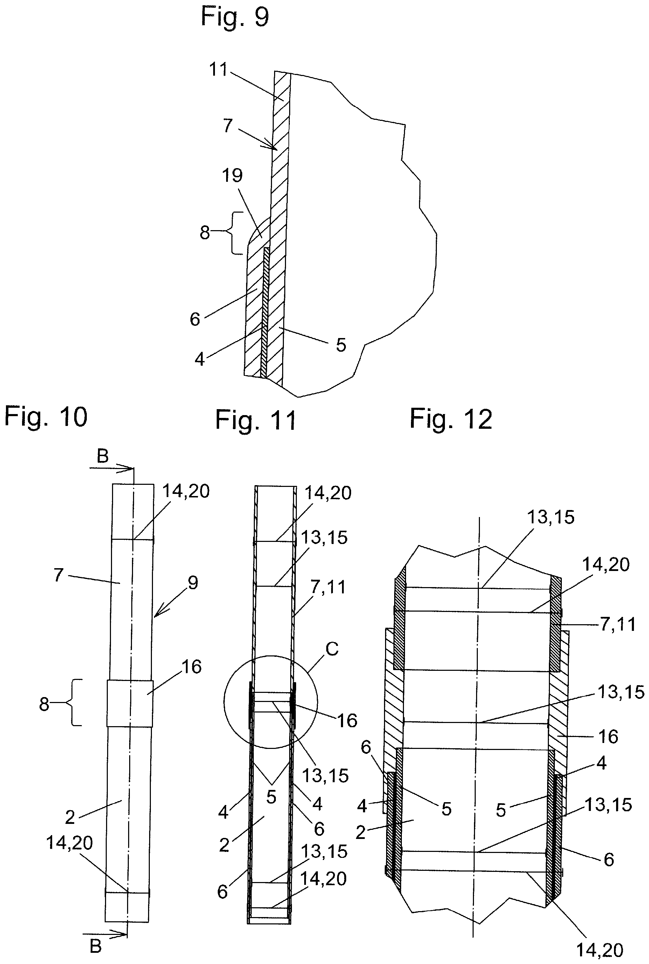

Abweichend hiervon zeigt die Fig. 8 eine Variante, bei der nur die innere Kunststoffschicht 5 des Verbundrohres 2 in die Kunststoffschicht 11 des Kunststoffrohres 7 einstückig übergeht. In dieser Variante wird das Kunststoffrohr 7 auch ausschließlich durch diese eine Kunststoffschicht 11 gebildet. Um eine Korrosion des Endes der Metallschicht 4 zu vermeiden, ist das Ende der Metallschicht 4 im Übergangsbereich 8 von außen von einem Kunststoffkörper 19 überdeckt. Dieser kann, wie hier in Fig. 8 gezeigt, als separater Körper entsprechend angeformt werden. Fig. 9 zeigt eine Variante, bei der dieser Kunststoffkörper 19 als ein über das Ende der Metallschicht 4 hinausgeführter Überstand bzw. eine entsprechende Verlängerung der äußeren Kunststoffschicht 6 des Verbundrohres 2 ausgebildet ist.

Die Fig. 10, 11 und 12 zeigen nun noch eine Variante, bei der wiederum eine Verbindungsmuffe 16 im Übergangsbereich 8 verwendet wird, um das Kunststoffrohr 7 mit dem Verbundrohr 2 zu einem durchgehenden Sondenrohr 9 zu verbinden. Die Fig. 10, 11 und 12 zeigen jeweils nur einen Abschnitt des Sondenrohres 9 um diesen Übergangsbereich 8 herum. Die hier nicht dargestellten Sondenköpfe 10 und Sondenfüße 3 können wie im ersten Ausführungsbeispiel gemäß der Fig. 1 bis 3 oder in anderer geeigneter Art und Weise ausgebildet sein. Fig. 10 zeigt eine Außenansicht dieses Bereichs des Sondenrohres 9. Fig. 11 zeigt den Längsschnitt entlang der Schnittlinie BB aus Fig. 10 und Fig. 12 zeigt vergrößert den Bereich C aus Fig. 11, in dem sich der Übergangsbereich 8 und damit die Verbindungsmuffe 16 befindet. Das hier dargestellte Kunststoffrohr 7 weist wiederum eine einzige Kunststoffschicht 11 auf.

Das Verbundrohr 2 und das Kunststoffrohr 7 sind im hier gezeigten Ausführungsbeispiel an einander gegenüberliegenden Seiten der Verbindungsmuffe 16 in diese eingeschoben. Es ist in diesem Ausführungsbeispiel dabei vorgesehen, dass die Verbindungsmuffe 16 das Verbindungsrohr 2 und das Kunststoffrohr 7 auf deren jeweiligen Außenflächen jeweils ein Stück weit überlappt. Die Verbindungsmuffe 16 besteht günstigerweise ausschließlich aus Kunststoff. Die Verbindung des Kunststoffrohres 7 mit der Verbindungsmuffe 16 kann z.B. wie in der EP 3 104 057 A1 ausgeführt sein. Für die Verbindung des Verbundrohres 2 mit der Verbindungsmuffe 16 können die in der EP 2 966 333 A1 gezeigten Varianten herangezogen werden.

Die Außendurchmesser 20 liegen günstigerweise auch bei den gezeigten Ausführungsbeispielen im eingangs genannten Wertebereich.

### Legende

### zu den Hinweisziffern:

- 1: Erdwärmesonde
- 2: Verbundrohr
- 3: Sondenfuß
- 4: Metallschicht
- 5: Kunststoffschicht
- 6: Kunststoffschicht
- 7: Kunststoffrohr
- 8: Übergangsbereich
- 9: Sondenrohr
- 10: Sondenkopf
- 11: Kunststoffschicht
- 12: Kunststoffschicht
- 13: Öffnungsquerschnitt
- 14: Außenquerschnitt
- 15: Innendurchmesser
- 16: Verbindungsmuffe
- 17: Verstärkungshülse
- 18: Rückschubsicherung
- 19: Kunststoffkörper
- 20: Außendurchmesser

## Patentansprüche

1. Erdwärmesonde (1) zur Gewinnung von Erdwärme aus dem Untergrund, wobei die Erdwärmesonde (1) zumindest ein Verbundrohr (2) und zumindest einen, das im Untergrund zu versenkende Ende der Erdwärmesonde (1) bildenden Sondenfuß (3) aufweist und das Verbundrohr (2) zumindest eine Metallschicht (4) und zumindest eine Kunststoffschicht (5, 6) aufweist, wobei die Erdwärmesonde (1) zusätzlich zumindest ein Kunststoffrohr (7) aufweist, wobei das Kunststoffrohr (7) und das Verbundrohr (2) in einem Übergangsbereich (8) ineinander einmünden und so ein durchgehendes Sondenrohr (9) der Erdwärmesonde (1) bilden, **dadurch gekennzeichnet, dass** die Erdwärmesonde (1) zumindest einen Sondenkopf (10) aufweist, welcher das dem Sondenfuß (3) gegenüberliegende andere Ende der Erdwärmesonde (1) bildet, wobei das Verbundrohr (2) einen Sondenfuß-seitigen Abschnitt und das Kunststoffrohr (7) einen Sondenkopf-seitigen Abschnitt des Sondenrohres (9) bildet.

2. Erdwärmesonde (1) nach Anspruch 1, **dadurch gekennzeichnet, dass** das Kunststoffrohr (7) eine Kunststoffschicht (11, 12) oder mehrere, vorzugsweise miteinander verbundene, Kunststoffschichten (11, 12) aufweist und/oder frei von Metallschichten ausgebildet ist.

3. Erdwärmesonde (1) nach Anspruch 1 oder 2, **dadurch gekennzeichnet, dass** das Verbundrohr (2) sich vom Übergangsbereich (8) bis zum Sondenfuß (3) erstreckt und/oder das Kunststoffrohr (7) sich vom Übergangsbereich (8) bis zum Sondenkopf (10) erstreckt und/oder dass das Sondenrohr (9) ausschließlich aus dem Verbundrohr (2) und dem Kunststoffrohr (7) und dem Übergangsbereich (8) besteht.

4. Erdwärmesonde (1) nach einem der Ansprüche 1 bis 3, **dadurch gekennzeichnet, dass** das Verbundrohr (2) und das Kunststoffrohr (7), vorzugsweise das gesamte Sondenrohr (9), einen konstanten inneren Öffnungsquerschnitt (13) aufweisen bzw. aufweist und/oder dass das Kunststoffrohr (7) einen kleineren Außenquerschnitt (14) als das Verbundrohr (2) aufweist und/oder dass das Kunststoffrohr (7) einen größeren inneren Öffnungsquerschnitt (14) als das Verbundrohr (2) aufweist.

5. Erdwärmesonde (1) nach einem der Ansprüche 1 bis 4, **dadurch gekennzeichnet, dass** die Metallschicht (4) des Verbundrohres (2) und/oder die Kunststoffschicht(en) (5, 6) des Verbundrohres (2) in sich jeweils umfangsgeschlossen ausgebildet ist bzw. sind.

6. Erdwärmesonde (1) nach einem der Ansprüche 1 bis 5, **dadurch gekennzeichnet, dass** das Verbundrohr (2) zumindest zwei Kunststoffschichten (5, 6) aufweist, wobei die Metallschicht (4) eine der Kunststoffschichten (5) umgibt und eine andere der Kunststoffschichten (6) die Metallschicht (4) umgibt.

7. Erdwärmesonde (1) nach einem der Ansprüche 1 bis 6, **dadurch gekennzeichnet, dass** das Verbundrohr (2) eine Länge von 3 m bis 800 m, vorzugsweise von 200 m bis 800 m, aufweist und/oder das Kunststoffrohr (7) eine Länge von 0,5 m bis 200 m, vorzugsweise von 5 m bis 160 m, aufweist.

8. Erdwärmesonde (1) nach einem der Ansprüche 1 bis 7, **dadurch gekennzeichnet, dass** das Verbundrohr (2) eine Druckfestigkeit im Bereich von 16 bar bis 80 bar, vorzugsweise von 25 bar bis 50 bar, aufweist und/oder dass das Kunststoffrohr (7) eine Druckfestigkeit im Bereich von 10 bar bis 25 bar, vorzugsweise von 10 bar bis 16 bar, aufweist.

9. Erdwärmesonde (1) nach einem der Ansprüche 1 bis 8, **dadurch gekennzeichnet, dass** das Verbundrohr (2) und/oder das Kunststoffrohr (7) einen Außendurchmesser (20) im Bereich von 20 mm bis 90 mm, vorzugsweise von 32 mm bis 63 mm, aufweist bzw. aufweisen.

10. Erdwärmesonde (1) nach einem der Ansprüche 1 bis 9, **dadurch gekennzeichnet, dass** das Verbundrohr (2) im Übergangsbereich (8) mittels zumindest einer Verbindungsmuffe (16) mit dem Kunststoffrohr (7) verbunden ist, indem das Kunststoffrohr (7) an der Verbindungsmuffe (16) befestigt, vorzugsweise angeschweißt oder angeklebt, und das Verbundrohr (2) an der Verbindungsmuffe (16) befestigt, vorzugsweise angeschweißt oder angeklebt, ist.

11. Erdwärmesonde (1) nach Anspruch 10, **dadurch gekennzeichnet, dass** das Verbundrohr (2) und das Kunststoffrohr (7) an einander gegenüberliegenden Seiten der Verbindungsmuffe (16) in die Verbindungsmuffe (16) eingeschoben sind, wobei vorzugsweise vorgesehen ist, dass die Verbindungsmuffe (16) das Verbundrohr (2) und das Kunststoffrohr (7) auf deren Außenflächen jeweils ein Stück weit überlappt.

12. Erdwärmesonde (1) nach Anspruch 10 oder 11, **dadurch gekennzeichnet, dass** die Verbindungsmuffe (16) ausschließlich aus Kunststoff besteht.

13. Erdwärmesonde (1) nach einem der Ansprüche 1 bis 9, **dadurch gekennzeichnet, dass** das Verbundrohr (2) im Übergangsbereich (8) direkt mit dem Kunststoffrohr (7) verbunden, vorzugsweise verschweißt oder verklebt, ist.

14. Erdwärmesonde (1) nach einem der Ansprüche 1 bis 9, **dadurch gekennzeichnet, dass** im Übergangsbereich (8) die Kunststoffschicht (5, 6) oder zumindest eine der Kunststoffschichten (5, 6) des Verbundrohres (2) einstückig in das Kunststoffrohr (7) übergeht und die Metallschicht (4) des Verbundrohres (2) im Übergangsbereich (8) endet.

15. Erdwärmesonde (1) nach Anspruch 14, **dadurch gekennzeichnet, dass** die Kunststoffschicht (5, 6) oder die zumindest eine der Kunststoffschichten (5, 6) des Verbundrohres (2), welche einstückig in das Kunststoffrohr (7) übergeht, im Verbundrohr (2) innerhalb der Metallschicht (4) angeordnet ist und/oder dass das Ende der Metallschicht (4) im Übergangsbereich (8) nach außen von einem Kunststoffkörper (19) überdeckt ist.
